# EUROPÄISCHE PATENTSCHRIFT

(11) **EP 4 428 043 B1**
(45) Veröffentlichungstag und Bekanntmachung des Hinweises auf die Patenterteilung: **22.10.2025**
(21) Anmeldenummer: 23160381.2
(22) Anmeldetag: 07.03.2023
(51) Int. Cl.: B64G 1/40

(54) **THERMISCHE ISOLIERUNG, HERSTELLUNGSVERFAHREN SOWIE KRYOGENER TREIBSTOFFTANK**
THERMAL INSULATION, METHOD OF MANUFACTURE, AND CRYOGENIC FUEL TANK
ISOLATION THERMIQUE, PROCÉDÉ DE FABRICATION ET RÉSERVOIR DE CARBURANT CRYOGÉNIQUE

(43) Veröffentlichungstag der Anmeldung: 11.09.2024
(73) Patentinhaber: ArianeGroup GmbH, 82024 Taufkirchen (DE)
(72) Erfinder: Wendt, Dr. Christian, 28199 Bremen (DE); Meyer, Rolf, 28199 Bremen (DE); Just, Daniel, 28199 Bremen (DE)
(74) Vertreter: Marschall, Stefan

(56) Entgegenhaltungen:
- EP-A1- 2 354 621
- EP-A1- 2 354 622
- EP-B1- 2 032 890
- EP-B1- 3 009 353
- DE-A1- 102011 050 473
- US-A1- 2004 256 395
- US-A1- 2005 136 239

## Beschreibung

Die Erfindung bezieht sich auf eine Isolierung eines kryogenen Treibstofftanks nach dem Oberbegriff des Anspruchs 1 und ein dazugehöriges Herstellungsverfahren nach dem Oberbegriff des Anspruchs 5 sowie einen kryogenen Treibstofftank nach dem Oberbegriff des Anspruchs 9.

Derartig isolierte Treibstofftanks werden in der Raumfahrt z.B. an einer kryogenen Oberstufe einer Trägerrakete eingesetzt.

Zur Isolierung von kryogenen Treibstofftanks von Oberstufen einer Trägerrakete werden standardmäßig auf der Außenseite geschlossenporige Schäume verwendet.

Während der Betankungsphase am Boden und während des Aufstiegs der Rakete verringern diese Schäume effektiv den Wärmeeintrag durch äußere Konvektion in die Treibstoffe. Zudem bieten sie einen guten Schutz gegen das Eindringen von äußeren Gasen und von Luftfeuchtigkeit in die Isolierung.

Diese Schäume basieren zumeist auf Polyvinylchlorid oder Polyurethan und werden entweder als vorbearbeitetes Plattenmaterial an den Treibstofftank angebracht oder direkt auf den Treibstofftank gesprüht.

Im späteren Verlauf eines Fluges im Weltall und insbesondere für zukünftige, lange Missionen einer Oberstufe ist jedoch eine mehrlagige Strahlungsisolierung eine weitaus effektivere Isolierung für die Treibstofftanks, da dann nur noch über Strahlung, vor allem durch die Sonne, Wärme in die kryogenen Treibstoffe eindringen kann.

Die standardmäßig in der Raumfahrt für diese Zwecke verwendete mehrlagige Strahlungsisolierung ist aus sehr leichten, beschichteten Folien mit dazwischenliegenden gasdurchlässigen Abstandslagen aufgebaut.

Diese mehrlagige Strahlungsisolierung alleine ist jedoch nicht geeignet, den konvektiven Wärmeeintrag und die Kondensation während der Betankungsphase am Boden zu vermeiden und würde zudem, auf der Außenseite der Rakete angebracht, beim Aufstieg der Rakete durch die starke Strömung zerstört werden.

Um dennoch die mehrlagige Strahlungsisolierung auf der Außenseite einer Rakete verwenden zu können, sind zum einen bewegliche Strukturen und zum anderen starre Strukturen bekannt.

Zu den beweglichen Strukturen gehören Verkleidungen, die nach der ersten Aufstiegsphase der Rakete abgeworfen werden können, und auch im Weltraum entfaltbare Sonnenschutzsysteme. Allgemein erhöhen jedoch solche beweglichen Strukturen die Komplexität und damit die Anfälligkeit des Systems.

Deshalb sind starre Strukturen zu bevorzugen, welche es auf Basis von geschlossenporigen Schäumen mit integriertem Wärmestrahlungsschutz gibt.

Dazu ist es bekannt, aufgesprühten geschlossenporigen Schaum als Isolierung zu verwenden, wobei dieser aber unter Weltraumbedingungen keine effektive Verminderung des Wärmedurchgangs durch Strahlung erreicht.

Ein weiterer Nachteil dieser Schäume ist die Kaltversprödung, welche insbesondere während langer Weltraummissionen und bei teilweiser Abwesenheit von äußeren Strahlungswärmequellen, vor allem bei Abschattung der Sonne oder auf der sonnenabgewandten Seite auftritt. Ist ein solcher kryogen, durchgekühlter Zustand der Schaumisolierung erreicht, kommt es insbesondere bei missions-erforderlichen Verformungen der Tankwand (z.B. bei Wiederbedrückung des Treibstofftanks), zum Aufbrechen des Schaums und zum Lösen des Schaums von der Tankwand, was dann u.a. zu unerwünschtem Weltraummüll führen kann.

Aus der EP 23 54 621 B1 ist eine Isolierung von kryogenen Treibstofftanks bekannt, bei welcher ein offenporiger Schaum auf einer geschlossenporigen Schaumunterschicht verklebt und zudem imprägniert ist, wobei mit der Imprägnierung ein Eindringen von Luftfeuchtigkeit während der Bodenbetankungsphase vermindert werden soll.

Durch den oben auf dieser Schaumunterschicht verklebten, leichten und offenporigen Schaum soll erreicht werden, dass unter Weltraumbedingungen, verglichen mit einem geschlossenporigen Schaum, sich die Thermal-Performance verbessert und bei Durchkühlung der Isolierung die strukturelle Integrität des Isolierungssystems erhalten bleibt.

Nachteilig an dieser Lösung ist aber, dass die obere, offenporige Schaumschicht, während der Aufstiegsphase der Trägerrakete die auftretenden aerothermalen Lasten nur zum Teil aufnehmen kann.

Auch ist es aus https://www.questthermal.com/products/launchvehicle-mli bekannt, mehrere Panels einer mehrlagigen Strahlungsisolierung auf einer geschlossenporigen Schaumunterschicht zu befestigen, wobei diese Panels die aerothermalen Lasten während der Aufstiegsphase der Trägerrakete überstehen sollen. Nachteilig an dieser Lösung ist aber, dass durch die Befestigungen der Panels einer mehrlagigen Strahlungsisolierung die Kaltversprödung der Schaumunterschicht tendenziell verstärkt wird, wobei zudem auch die Befestigungen der Panels einer mehrlagigen Strahlungsisolierung im Schaum bei einer Kaltversprödung des Schaums den Belastungen nicht standhalten könnten.

Deshalb ist aus der EP 23 54 622 B1 eine Isolierung bekannt, welche eine geschlossenporige Schaumunterschicht, ein innenliegende mehrlagige Strahlungsisolierung mit einem Spülgassystem und eine geschlossenporige Schaumoberschicht aufweist. Nachteilig an dieser Lösung ist aber, dass auch hier die Vermeidung des möglichen Entstehens von Weltraummüll bei Kaltversprödung des Schaumes ungelöst ist, da weitere Strukturen fehlen, welche nicht aus Schaum bestehen und auch bei kryogenen Temperaturen die strukturelle Integrität des Systems gewährleisten.

Außerdem ist die Herstellung dieser Isolierung nicht effizient, da die vorgefertigten Schaumstrukturen einzeln verklebt werden müssen, wozu einzelne Panels einer mehrlagigen Strahlungsisolierung in die dafür vorgesehenen Hohlräume im Schaum platziert und fixiert werden müssen.

Zudem ist die Installation des Spülleitungssystems im Schaum aufwendig, damit die effektive Spülung aller Hohlräume ermöglicht wird.

Eine weitere Isolierung eines kryogenischen Behälters mit Schaumelementen ist aus der EP 2 032 890 bekannt.

Der Erfindung liegt die Aufgabe zu Grunde, eine schaumbasierte Isolierung mit innenliegender Strahlungsisolierung für einen kryogenen Treibstofftank vorzuschlagen, bei der keine Kaltversprödung des Schaums auftritt bzw. diese zumindest reduziert ist und dessen Herstellungsverfahren effizient ist. Eine weitere Aufgabe ist es, einen kryogenen Treibstofftank bereitzustellen, bei dessen schaumbasierter Isolierung mit innenliegender Strahlungsisolierung die Integrität des Isolierungssystems auch im kryogenen, durchgekühlten Zustand erhalten bleibt.

Diese Aufgabe wird gelöst durch eine Isolierung mit den Merkmalen des Anspruches 1, durch ein Verfahren mit den Merkmalen des Anspruches 5 und durch einen Tank mit den Merkmalen des Patentanspruchs 9.

Zweckdienliche Ausgestaltungen ergeben sich aus den Unteransprüchen 2 bis 4 und 6 bis 8.

Die neue Isolierung eines kryogenen Treibstofftanks beseitigt die genannten Nachteile des Standes der Technik.

Eine erfindungsgemäße thermische Isolierung für einen Behälter, beispielsweise einen kryogenen Treibstofftank einer Trägerrakete, oder für Rohre hat eine geschlossenporige Schaumunterschicht, eine geschlossenporigen Schaumoberschicht und mehrere zwischen ihnen angeordneten Panels einer mehrlagigen Strahlungsisolierung, bei der die geschlossenporige Schaumunterschicht zur Aufnahme der Panels einer mehrlagigen Strahlungsisolierung mehrere durch Stege umrandete Taschen aufweist. Benachbarte Taschen sind über Kanäle miteinander verbunden und die geschlossenporige Schaumunterschicht und die geschlossenporige Schaumoberschicht sind über die Stege miteinander verbunden. Erfindungsgemäß ist zwischen den Stegen der geschlossenporigen Schaumunterschicht und der geschlossenporigen Schaumoberschicht ein Netz angeordnet ist, wobei an dem Netz die Panels einer mehrlagigen Strahlungsisolierung befestigt sind und in den Taschen der geschlossenporigen Schaumunterschicht gehalten werden.

Zum einen wird durch die Panels ein gegenüber standardmäßigen Schäumen verminderter Wärmedurchgang durch die Isolierung unter Weltraumbedingungen erreicht, weil mit den Panels eine zusätzliche Strahlungsisolierung in das System integriert ist.

Zum anderen wird mit dem Netz eine Faserverstärkung der Isolierung erreicht, wodurch die Integrität des Isolierungssystems auch im kryogen, durchgekühlten Zustand erhalten bleibt.

Auch wird dadurch eine ausreichende Isolierwirkung auch während der Betankungsphase am Boden, mindestens auf dem Niveau von Standardschäumen, gewährleistet.

Zudem können äußere Gase nicht an der Isolierung kondensieren und Luftfeuchtigkeit nicht in die Isolierung eindringen, da die Hohlräume (Taschen) der Isolierung am Boden mit einem trockenen Gas (z.B. Stickstoff) gespült werden, wobei die Hohlräume über Kanäle verbunden sind und ein Spülsystem ausbilden.

Von Vorteil ist es auch, wenn das Netz feinmaschige Bereiche und grobmaschige Bereiche aufweist, wobei die feinmaschigen Bereiche die Panels der mehrlagigen Strahlungsisolierung und die Kanäle sowie die grobmaschigen Bereiche die Stege überdecken. Aufgrund der Feinmaschigkeit wirkt das Netz quasi als eine Wandung im Bereich der Kanäle und der Panels der mehrlagigen Strahlungsisolierung.

Bevorzugterweise weisen die feinmaschigen Bereiche eine Maschenweite von 0,1 mm bis 2 mm, vorzugsweise von 0,5 mm, und die grobmaschigen Bereiche eine Maschenweite von 5 mm bis 30 mm, vorzugsweise von 15mm, auf. Hierdurch bindet sich bei der Herstellung der Isolierung beim automatisierten Aufsprühen der Schaumoberschicht diese Schaumoberschicht durch die grobmaschigen Bereiche über die Stege an die Schaumunterschicht an, während die feinmaschigen Bereiche diesen Schaum nicht durchlassen.

Bevorzugterweise bilden die über Kanäle miteinander verbundenen Taschen ein Spülsystem. Das Spülsystem ist dabei derart ausgebildet, dass es zum einen am Boden effektiv die Kondensation von Gasen und Feuchtigkeit in den Taschen und den darin enthaltenen Panels einer mehrlagigen Strahlungsisolierung verhindert. Zum anderen ermöglicht es beim Aufstieg der Rakete eine effektive Evakuierung der Taschen.

Gemäß einem erfindungsgemäßen Verfahren wird bei der Herstellung der Isolierung von einem Behälter wie einem kryogenen Treibstofftank die Schaumunterschicht automatisiert aufgesprüht und anschließend derart gefräst, dass in der Schaumunterschicht Taschen für die einzelnen Panels einer mehrlagigen Strahlungsisolierung und dazwischen Kanäle für die Spülung am Boden und für die Evakuierung während des Aufstieges der Rakete hergestellt werden. Anschließend werden die Panels einer mehrlagigen Strahlungsisolierung, welche an dem Netz befestigt sind, in die jeweilige Tasche der geschlossenporigen Schaumunterschicht positioniert. Dann wird die geschlossenporige Schaumoberschicht auf das Netz aufgesprüht, wobei im grobmaschigen Bereich des Netzes eine strukturelle Verbindung über die Stege mit der geschlossenporigen Schaumunterschicht entsteht.

Das erfindungsgemäße Verfahren ermöglicht die effiziente Anbringung einer Isolierung an einem Behälter, an Rohren und dergleichen.

Die an die feinmaschigen Bereiche des Netzes befestigten Panels der mehrlagigen Strahlungsisolierung können vorkonfektioniert sein. Durch diese Maßnahme können die Panels auf die Außenkontur des Behälters im Vorfeld angepasst werden, so dass beim Umspannen des Netzes um den Behälter, beispielsweise ein Treibstofftank, die einzelnen Panels einer mehrlagigen Strahlungsisolierung in die jeweiligen Taschen einer Schaumunterschicht passen, wodurch auch ein effizienter Herstellungsprozess erreicht wird.

Das vorkonfektionierte Netz kann zudem als Netzband ausgeführt sein, welches mindestens eine Reihe an Panels einer mehrlagigen Strahlungsisolierung aufweist und in seinem Umfang einen zu isolierenden Behälter wie Treibstofftanks umschließt. Durch die Ausbildung als Netzband wird die Anbringung am Behälter weiter vereinfacht.

Ein erfindungsgemäßer Treibstofftank weist die erfindungsgemäße thermische Isolierung auf. Zum einen weist ein solcher Treibstofftank eine hohe thermische Isolierung auf. Zum anderen bleibt die Integrität des Isolierungssystems eines solchen Treibstofftanks auch im kryogen, durchgekühlten Zustand der thermischen Isolierung erhalten.

Sonstige vorteilhafte Ausführungsbeispiele der Erfindung sind Gegenstand weiterer Unteransprüche.

Die Erfindung soll anhand eines Ausführungsbeispiels näher erläutert werden.

Dazu zeigen:
- **Fig. 1:**: Schnittdarstellung einer Seitenansicht der Isolierung,
- **Fig. 2:**: Schnittdarstellung der Draufsicht einer geschlossenporigen Unterschicht,
- **Fig. 3:**: Schnittdarstellung der Draufsicht eines Netzes,
- **Fig. 4:**: Draufsicht eines Netzbandes mit einer Reihe an Panels einer mehrlagigen Strahlungsisolierung vorkonfektionierten Netzes und
- **Fig. 5:**: räumliche Schnittdarstellung eines Treibstofftanks mit teilweise angeordneten Netzbändern.

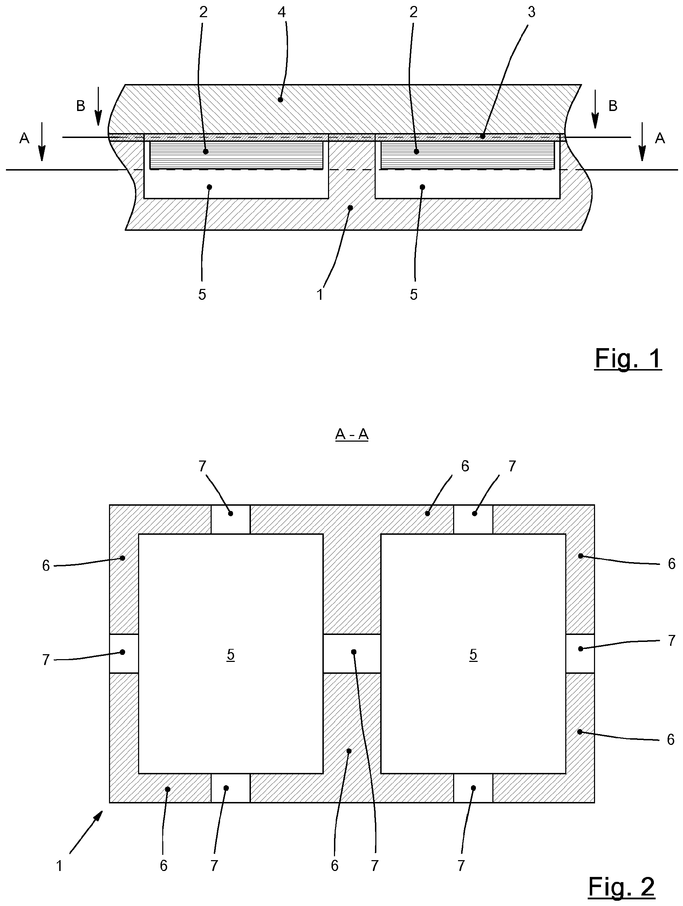

Gemäß der **Fig. 1** bis **Fig. 5** besteht die neue Isolierung eines kryogenen Treibstofftanks aus einer geschlossenporigen Schaumunterschicht 1, auf welcher ein Netz 3 mit mehreren Panels einer mehrlagigen Strahlungsisolierung 2 und auf dem Netz 3 eine geschlossenporige Schaumoberschicht 4 angeordnet sind.

Dabei sind die Panels einer mehrlagigen Strahlungsisolierung 2, an dem Netz 3 hängend, in die jeweiligen, in der geschlossenporigen Schaumunterschicht 1 eingelassen Taschen 5 eingepasst sowie die geschlossenporige Schaumunterschicht 1 und die geschlossenporige Schaumoberschicht 4 über mehrere, zwischen den Taschen 5 ausgebildeten Stege 6 verbunden.

Zudem sind auch jeweils benachbarte Taschen 5 über Kanäle 7 miteinander verbunden, wodurch ein Spülgassystem der Taschen 5 und der darin befindlichen Panels einer mehrlagigen Strahlungsisolierung 2 ausgebildet wird.

Dazu weist das Netz 3 einen feinmaschigen Bereich 9 und mehrere grobmaschigen Bereiche 8 auf, wobei der feinmaschige Bereich 9 das Panel einer mehrlagigen Strahlungsisolierung 2 und die Durchbrüche 7 überdeckt. Die grobmaschigen Bereiche 8 hingegen überdecken die Stege 6, worüber die geschlossenporige Schaumoberschicht 4 mit der geschlossenporigen Schaumunterschicht 1 verbunden ist.

Dabei weisen die feinmaschigen Bereiche 9 des Netzes 3 eine Maschenweite von 0,1 mm bis 2 mm, vorzugsweise von 0,5 mm auf. Die grobmaschigen Bereiche 8 des Netzes 3 hingegen haben eine Maschenweite von 5 mm bis 30mm, vorzugsweise von 15 mm.

Die Panels der mehrlagigen Strahlungsisolierung 2 sind an dem feinmaschigen Bereich 9 des Netzes 3 so befestigt, dass die Panels der mehrlagigen Strahlungsisolierung 2 in den Taschen 5 hängen können und dabei nicht auf der geschlossenporigen Unterschicht 1 aufliegen.

Die Herstellungsverfahren der neuen Isolierung eines kryogenen Treibstofftanks gemäß der **Fig. 1** bis **Fig. 5** unterteilt sich in vier weitestgehend automatisierten Prozessschritten, wobei parallel zu dem ersten oder zweiten Schritt das Netz 3 mit den Panels einer mehrlagigen Strahlungsisolierung 2 vorkonfektioniert wird.

Im Einzelnen sind diese Schritte das Aufsprühen der geschlossenporige Schaumunterschicht 1 auf die Außenseite eines Treibstofftanks, anschließend das Einfräsen der Taschen 5 in die geschlossenporige Schaumunterschicht 1 sowie das Vorkonfektionieren des Netzes 3 mit den Panels einer mehrlagigen Strahlungsisolierung 2, wobei die Panels einer mehrlagigen Strahlungsisolierung 2 an das Netz 3 befestigt werden, gefolgt von dem Positionieren der Panel einer mehrlagigen Strahlungsisolierung 2 des vorkonfektionierten Netzes 3 in die jeweiligen Taschen 5 der geschlossenporigen Schaumunterschicht 1 sowie dem abschließenden Aufsprühen der geschlossenporigen Schaumoberschicht 4, bei der im grobmaschigen Bereich des Netzes 3 eine strukturelle Verbindung über die Stege 6 mit der geschlossenporigen Schaumunterschicht 1 entsteht.

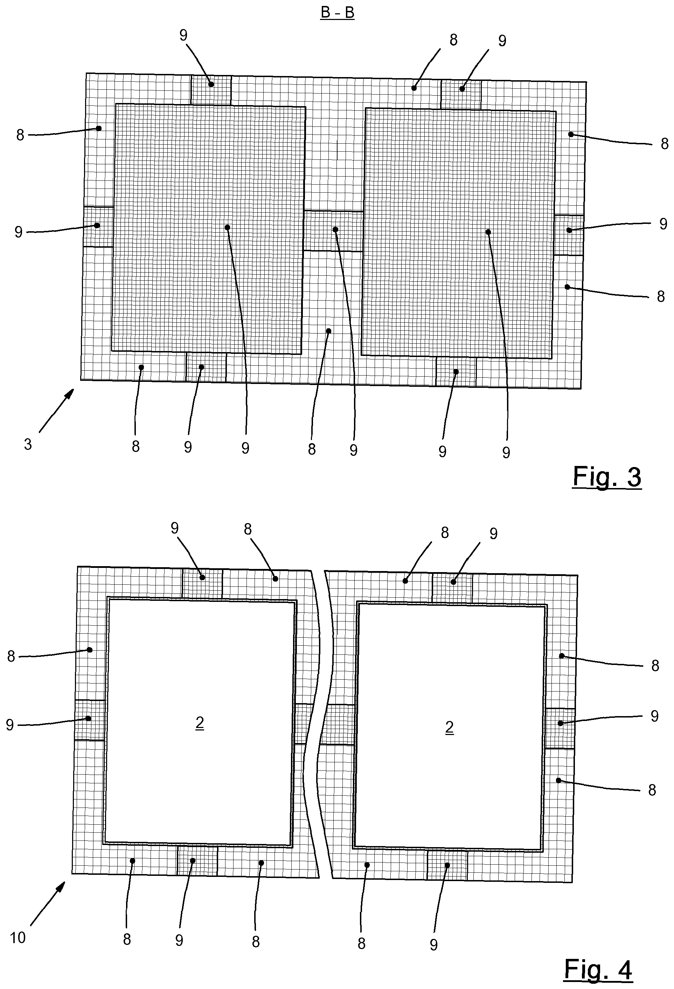

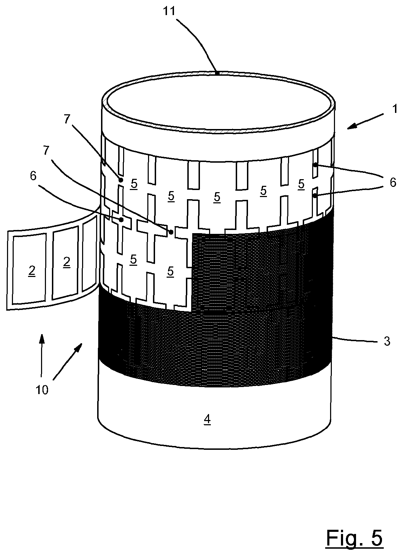

In einer besonders effizienten Ausführungsform, gemäß der **Fig. 4****,** wird dieses vorkonfektionierte Netz 3 abschnittsweise in Form eines Netzbandes 10 ausgeführt, wobei jedes Netzband 10 mindestens eine Reihe an Panels einer mehrlagigen Strahlungsisolierung 2 aufweist und eine derartige Länge besitzt, dass das Netzband 10 den Umfang eines zu isolierenden Treibstofftanks 11 umschließt, weil dadurch das Netzband 10, gemäß der **Fig. 5****,** wie ein Gürtel um den Treibstofftank 11 gespannt und an ihren Enden miteinander verbunden werden kann.

Das Netz 3 dient der neuen Isolierung von kryogenen Treibstofftanks zusätzlich auch als Faserverstärkung. Dazu ist die Form, Abmessung und Anordnung der Maschen des Netzes 3 so gewählt, dass die Maschen den funktionsbedingten Dehnungen des Treibstofftanks im Flug in idealerweise folgen können, und zugleich die durch den Herstellungsprozess bedingten angepasste Anbindung gewährleistet werden.

Der feinmaschige Bereich 9 des Netzes 3 ist derart feinmaschig, dass beim Aufsprühen der geschlossenporigen Schaumoberschicht 4 dieser Netzbereich nicht von dem Schaum durchdrungen wird. Dadurch wird ein Eindringen dieser geschlossenporigen Schaumoberschicht 4 in die Kanäle 7 sowie in den Freiraum zwischen den Taschen 5 und den Panels einer mehrlagigen Strahlungsisolierung 2 verhindert wird.

Ein bevorzugtes Ausführungsbeispiel eines Treibstofftanks zur Aufnahme von kryogenen Treibstoffen hat eine äußere Isolierung aus einer geschlossenporigen Schaumunterschicht 1, einer geschlossenporigen Schaumoberschicht 4 und mehrere zwischen ihnen angeordneten Panels einer mehrlagigen Strahlungsisolierung 2. Die geschlossenporige Schaumunterschicht 1 weist zur Aufnahme der Panels einer mehrlagigen Strahlungsisolierung 2 mehrere durch Stege 6 umrandete Taschen 5 auf. Benachbarte Taschen 5 sind jeweils über Kanäle 7 miteinander verbunden. Die geschlossenporigen Schaumunterschicht 1 und die geschlossenporige Schaumoberschicht 4 sind über die Stege 6 miteinander verbunden. Zwischen den Stegen 6 der geschlossenporigen Schaumunterschicht 1 und der geschlossenporigen Schaumoberschicht 4 ist ein Netz 3 angeordnet ist. An dem Netz 3 sind Panels einer mehrlagigen Strahlungsisolierung 2 befestigt und so in den Taschen 5 der geschlossenporigen Schaumunterschicht 1 gehalten.

Offenbart ist eine thermische Isolierung, mit einer geschlossenporigen Schaumunterschicht 1, einer geschlossenporigen Schaumoberschicht 4 und mehreren zwischen ihnen angeordneten Panels einer mehrlagigen Strahlungsisolierung 2, wobei die geschlossenporigen Schaumunterschicht 1 zur Aufnahme der Panels einer mehrlagigen Strahlungsisolierung 2 mehrere durch Stege 6 umrandete Taschen 5 aufweist, wobei jeweils benachbarte Taschen 5 über Kanäle 7 miteinander verbunden sind sowie die geschlossenporigen Schaumunterschicht 1 und die geschlossenporige Schaumoberschicht 4 über die Stege 6 miteinander verbunden sind, dadurch, dass zwischen den Stegen 6 der geschlossenporigen Schaumunterschicht 1 und der geschlossenporigen Schaumoberschicht 4 ein Netz 3 angeordnet ist, wobei an dem Netz 3 Panels einer mehrlagigen Strahlungsisolierung 2 befestigt sind und in den Taschen 5 der geschlossenporigen Schaumunterschicht 1 gehalten werden.

Derartig isolierte Treibstofftanks 11 werden in der Raumfahrt z.B. an einer kryogenen Oberstufe einer Trägerrakete eingesetzt.

### Bezugszeichenliste

- 1: geschlossenporige Unterschicht
- 2: Panel einer mehrlagige Strahlungsisolierung
- 3: Netz
- 4: geschlossenporige Oberschicht
- 5: Tasche
- 6: Steg
- 7: Kanal
- 8: grobmaschiger Bereich
- 9: feinmaschiger Bereich
- 10: Netzband
- 11: Treibstofftank

## Patentansprüche

1. Isolierung eines Behälters, insbesondere eines Treibstofftanks einer Trägerrakete, mit einer geschlossenporigen Schaumunterschicht (1), einer geschlossenporigen Schaumoberschicht (4) und mehreren zwischen ihnen angeordneten Panels einer mehrlagigen Strahlungsisolierung (2), wobei:
- die geschlossenporigen Schaumunterschicht (1) zur Aufnahme der Panels einer mehrlagigen Strahlungsisolierung (2) mehrere durch Stege (6) umrandete Taschen (5) aufweist, wobei jeweils benachbarte Taschen (5) über Kanäle (7) miteinander verbunden sind sowie
- die geschlossenporigen Schaumunterschicht (1) und die geschlossenporige Schaumoberschicht (4) über die Stege (6) miteinander verbunden sind,
wobei zwischen den Stegen (6) der geschlossenporigen Schaumunterschicht (1) und der geschlossenporigen Schaumoberschicht (4) ein Netz (3) angeordnet ist, wobei an dem Netz (3) die Panels einer mehrlagigen Strahlungsisolierung (2) befestigt sind und in den Taschen (5) der geschlossenporigen Schaumunterschicht (1) gehalten werden.

2. Isolierung nach Anspruch 1, wobei das Netz (3) feinmaschige Bereiche (9) und grobmaschige Bereiche (8) aufweist, wobei:
- die feinmaschigen Bereiche (9) die Panels der mehrlagigen Strahlungsisolierung (2) und die Kanäle (7) sowie
- die grobmaschigen Bereiche (8) die Stege (6) überdecken.

3. Isolierung nach Anspruch 2, wobei die feinmaschigen Bereiche (9) eine Maschenweite von 0,1 mm bis 2 mm, vorzugsweise von 0,5 mm und die grobmaschigen Bereiche (8) von eine Maschenweite von 5 mm bis 30 mm, vorzugsweise von 15 mm, aufweisen.

4. Isolierung nach einem der Ansprüche 2 bis 3, wobei die über Kanäle (7) miteinander verbundenen Taschen (5) ein Spülsystem ausbilden, welches am Boden die Kondensation von Gasen und Feuchtigkeit in den Taschen (5) und den darin enthaltenen Panels einer mehrlagigen Strahlungsisolierung (2) verhindert und beim Aufstieg der Rakete eine Evakuierung der Taschen (5) ermöglicht.

5. Verfahren zur Herstellung einer Isolierung nach den Ansprüchen 1 bis 4,
**dadurch gekennzeichnet, dass**:
a) die geschlossenporige Schaumunterschicht (1) auf die Außenseite eines Behälters, beispielsweise eines Treibstofftanks (10), aufgesprüht wird,
b) in die geschlossenporige Schaumunterschicht (1) die Taschen (5) eingefräst werden sowie an einer Seite des Netzes (3) die Panels einer mehrlagigen Strahlungsisolierung (2) befestigt werden,
c) die Panels einer mehrlagigen Strahlungsisolierung (2) des Netzes (3) in die jeweiligen Tasche (5) der geschlossenporigen Schaumunterschicht (1) positioniert werden,
d) die geschlossenporige Schaumoberschicht (4) auf das Netz (3) aufgesprüht wird, wobei im grobmaschigen Bereich des Netzes (3) eine strukturelle Verbindung über die Stege (6) mit der geschlossenporigen Schaumunterschicht (1) entsteht.

6. Verfahren nach Anspruch 5,
**dadurch gekennzeichnet, dass** das Netz (3) vorkonfektioniert wird, indem die Panels einer mehrlagigen Strahlungsisolierung (2) jeweils an die feinmaschigen Bereiche (9) des Netzes (3) befestigt werden.

7. Verfahren nach Anspruch 6,
**dadurch gekennzeichnet, dass** vorkonfektionierte Netz (3) als Netzband (10) ausgeführt werden, welches mindestens eine Reihe an Panels einer mehrlagigen Strahlungsisolierung (2) aufweist und in seinem Umfang einen zu isolierenden Treibstofftank (11) umschließt.

8. Verfahren nach Anspruch 7,
**dadurch gekennzeichnet, dass** das Netzband (10) um den Umfang des Treibstofftanks (11) gelegt und dabei die Panels einer mehrlagigen Strahlungsisolierung (2) in die jeweiligen Taschen (5) positioniert und anschließend die Enden des Netzbandes (10) miteinander verbunden werden.

9. Kryogener Treibstofftank einer Oberstufe einer Trägerrakete,
**dadurch gekennzeichnet, dass** dieser Treibstofftank (11) eine Isolierung nach den Ansprüchen 1 bis 4 aufweist und/oder eine Isolierung, die nach den Ansprüche 5 bis 8 hergestellt ist.

## Claims

1. An insulation of a container, in particular of a propellant tank of a launch vehicle, having a closed-cell foam underlayer (1), a closed-cell foam overlayer (4) and a plurality of panels of a multilayered radiation insulation (2) which are arranged between them, wherein:
- the closed-cell foam underlayer (1) has a plurality of pockets (5) for accommodating the panels of a multilayered radiation insulation (2), which pockets are surrounded by webs (6), wherein adjacent pockets (5) are connected to one another via channels (7) in each case, and also
- the closed-cell foam underlayer (1) and the closed-cell foam overlayer (4) are connected to one another by means of the webs (6),
wherein a mesh (3) is arranged between the webs (6) of the closed-cell foam underlayer (1) and the closed-cell foam overlayer (4), wherein the panels of a multilayered radiation insulation (2) are fastened to the mesh (3) and are held in the pockets (5) of the closed-cell foam underlayer (1).

2. The insulation according to Claim 1,
wherein the mesh (3) has fine-meshed regions (9) and coarse-meshed regions (8), wherein:
- the fine-meshed regions (9) cover the panels of the multilayered radiation insulation (2) and the channels (7), and also
- the coarse-meshed regions (8) cover the webs (6).

3. The insulation according to Claim 2,
wherein the fine-meshed regions (9) have a mesh size of 0.1 mm to 2 mm, preferably of 0.5 mm and the coarse-meshed regions (8) have a mesh size of 5 mm to 30 mm, preferably of 15 mm.

4. The insulation according to any one of Claims 2 to 3,
wherein the pockets (5) which are connected to one another via channels (7) form a rinsing system which, on the ground, prevents the condensation of gases and moisture in the pockets (5) and the panels of a multilayered radiation insulation (2) contained therein and, during the ascent of the rocket, enables an evacuation of the pockets (5).

5. A method for producing insulation according to any one of Claims 1 to 4,
**characterized in that**:
a) the closed-cell foam underlayer (1) is sprayed onto the outside of a container, for example a propellant tank (10),
b) the pockets (5) are cut into the closed-cell foam underlayer (1) and the panels of multilayered radiation insulation (2) are fastened to one side of the mesh (3),
c) the panels of multilayered radiation insulation (2) of the mesh (3) are positioned in the respective pockets (5) of the closed-cell foam underlayer (1),
d) the closed-cell foam overlayer (4) is sprayed onto the mesh (3), wherein a structural connection to the closed-cell foam underlayer (1) is created by means of the webs (6) in the coarse-meshed region of the mesh (3).

6. The method according to Claim 5,
**characterized in that** the mesh (3) is prefabricated by fastening the panels of multilayered radiation insulation (2) to the fine-meshed regions (9) of the mesh (3) in each case.

7. The method according to Claim 6,
**characterized in that** prefabricated mesh (3) is realized as mesh band (10) which has at least one row of panels of multilayered radiation insulation (2) and encloses a propellant tank (11), which is to be insulated, in its perimeter.

8. The method according to Claim 7,
**characterized in that** the mesh band (10) is laid around the perimeter of the propellant tank (11) and in the process the panels of multilayered radiation insulation (2) are positioned in the respective pockets (5) and subsequently the ends of the mesh band (10) are connected to one another.

9. A cryogenic propellant tank of an upper stage of a launch vehicle,
**characterized in that** this propellant tank (11) has insulation according to Claims 1 to 4 and/or insulation which is produced according to Claims 5 to 8.

## Revendications

1. Isolation d'un réservoir, en particulier d'un réservoir de carburant d'un lanceur, avec une couche inférieure de mousse à pores fermés (1), une couche supérieure de mousse à pores fermés (4) et plusieurs panneaux disposés entre elles d'une isolation au rayonnement multicouche (2), sachant que :
- la couche inférieure de mousse à pores fermés (1) comporte plusieurs poches (5) bordées par des nervures (6) pour loger les panneaux d'une isolation au rayonnement multicouche (2), sachant que les poches voisines (5) sont respectivement reliées entre elles par des conduits (7), et
- la couche inférieure de mousse à pores fermés (1) et la couche supérieure de mousse à pores fermés (4) sont reliées entre elles par les nervures (6),
sachant qu'entre les nervures (6) de la couche inférieure de mousse à pores fermés (1) et de la couche supérieure de mousse à pores fermés (4) est disposé un filet (3), sachant que les panneaux d'une isolation au rayonnement multicouche (2) sont fixés au filet (3) et sont maintenus dans les poches (5) de la couche inférieure de mousse à pores fermés (1).

2. Isolation selon la revendication 1,
sachant que le filet (3) comporte des zones à mailles fines (9) et des zones à grosses mailles (8), sachant que :
- les zones à mailles fines (9) recouvrent les panneaux de l'isolation au rayonnement multicouche (2) et les conduits (7) et
- les zones à grosses mailles (8) recouvrent les nervures (6).

3. Isolation selon la revendication 2,
sachant que les zones à mailles fines (9) comportent un maillage de 0,1 mm à 2 mm, de préférence de 0,5 mm et les zones à grosses mailles (8) un maillage de 5 mm à 30 mm, de préférence de 15 mm.

4. Isolation selon l'une quelconque des revendications 2 à 3,
sachant que les poches (5) reliées entre elles par les conduits (7) constituent un système de purge, lequel évite au fond la condensation des gaz et de l'humidité dans les poches (5) et aux panneaux contenus dedans d'une isolation au rayonnement multicouche (2) et permet une évacuation des poches (5) lors de l'ascension de la fusée.

5. Procédé de fabrication d'une isolation selon les revendications 1 à 4,
**caractérisé en ce que**
a) la couche inférieure de mousse à pores fermés (1) sur la face extérieure d'un réservoir, par exemple d'un réservoir de carburant (10), est pulvérisée,
b) dans la couche inférieure de mousse à pores fermés (1), les poches (5) sont fraisées et les panneaux d'une isolation au rayonnement multicouche (2) sont fixés à un côté du filet (3),
c) les panneaux d'une isolation au rayonnement multicouche (2) du filet (3) sont positionnés dans la poche respective (5) de la couche inférieure de mousse à pores fermés (1),
d) la couche supérieure de mousse à pores fermés (4) sur le filet (3) est pulvérisée, sachant que dans la zone à grosses mailles du filet (3), il est créé une liaison structurale par les nervures (6) avec la couche inférieure de mousse à pores fermés (1).

6. Procédé selon la revendication 5,
**caractérisé en ce que** le filet (3) est préconfectionné, les panneaux d'une isolation au rayonnement multicouche (2) étant respectivement fixés aux zones à mailles fines (9) du filet (3).

7. Procédé selon la revendication 6,
**caractérisé en ce que** le filet (3) préconfectionné est exécuté sous la forme d'une bande de filet (10), laquelle comporte au moins une rangée sur les panneaux d'une isolation au rayonnement multicouche (2) et entoure sur sa périphérie un réservoir de carburant à isoler (11).

8. Procédé selon la revendication 7,
**caractérisé en ce que** la bande de filet (10) est posée autour de la périphérie du réservoir de carburant (11) et les panneaux d'une isolation au rayonnement multicouche (2) sont à cet effet positionnés dans les poches respectives (5) et les extrémités de la bande de filet (10) sont ensuite reliées entre elles.

9. Réservoir de carburant cryogénique d'un étage supérieur d'un lanceur,
**caractérisé en ce que** ce réservoir de carburant (11) comporte une isolation selon les revendications 1 à 4 et/ou une isolation, qui est fabriquée selon les revendications 5 à 8.
